# EUROPÄISCHE PATENTSCHRIFT

(11) **EP 0 750 592 B1**
(45) Veröffentlichungstag und Bekanntmachung des Hinweises auf die Patenterteilung: **22.04.1998**
(21) Anmeldenummer: 95913117.8
(22) Anmeldetag: 15.03.1995
(51) Int. Cl.: C02F 5/06

(54) **VERFAHREN UND VORRICHTUNG ZUR ENTKARBONISIERUNG VON ROHWASSER**
METHOD AND DEVICE FOR DECARBONATING UNTREATED WATER
PROCEDE ET DISPOSITIF DE DECARBONATATION D'EAU BRUTE

(30) Priorität: 16.03.1994 DE 4408862
(43) Veröffentlichungstag der Anmeldung: 02.01.1997
(73) Patentinhaber: PASSAVANT-WERKE AG, 65322 Aarbergen 7 (DE)
(72) Erfinder: HUBERT, Helmut, D-65197 Wiesbaden (DE); COENEN, Hubert, D-65326 Aarbergen 2 (DE)
(86) Internationale Anmeldenummer: EP9500956
(87) Internationale Veröffentlichungsnummer: WO9525073

(56) Entgegenhaltungen:
- EP-A- 0 231 762
- FR-A- 2 304 573
- US-A- 3 487 017

## Beschreibung

Die Erfindung betrifft ein Verfahren zur Entkarbonisierung von Rohwasser, wobei dem Rohwasser Kalziumhydoxide in Form von Kalkwasser zudosiert werden, gemäß den Merkmalen des Oberbegriffs des Anspruchs 1. Die Erfindung bezieht sich ferner auf eine Vorrichtung zur Durchführung des Verfahrens.

Zur Kalkentkarbonisierung großer Rohwassermengen werden üblicherweise sogenannte Schnellreaktoren verwendet (vgl. "Untersuchungen zur Optimierung der Schnellentkarbonisierung bei der Trinkwasseraufbereitung", Heft 32 der Veröffentlichungen des Bereichs und des Lehrstuhls für Wasserchemie und der DVGW-Forschungsstelle am Engler-Bunte-Institut der Universität Karlsruhe Seiten 9-14, Karlsruhe 1988). Dabei durchströmt das mit Kalkmilch oder Kalkwasser versetzte Wasser im Aufstrom eine Wirbelschicht aus Kontaktstoffen. Das hierbei entstehende Kalziumkarbonat wird kristallin an die Kontaktstoffe angelagert. Nach der Entkarbonisierung des Rohwassers wird dieses zur Beseitigung der in dem Rohwasser noch enthaltenen Schwebstoffe und unlöslichen Reaktionsprodukte dem Schnellreaktor nachgeschalteten Filtern zugeführt. Diese Filter müssen in vorgegebenen Zeitabständen, z.B. einmal pro Tag, rückgespült werden, wobei in größeren Wasserwerken erhebliche Mengen von Rückspülwässer anfallen.

Zur Reinigung der Filterrückspülwässer werden diese in Absatzbecken geleitet, wo eine Sedimentation der Feststoffe stattfindet, so daß nach einer entsprechenden Sedimentationszeit das überstehende Wasser abgepumpt und z.B. dem entkarbonisiertem Rohwasser zugemischt werden kann. Der verbleibende Schlamm wird zur weiteren Entwässerung in einen Eindicker gefördert und gegebenenfalls nach weiteren Verfahrensschritten schließlich auf einer Deponie entsorgt.

Nachteilig ist bei diesem bekannten Verfahren vor allem der relativ hohe Aufwand, der zur Reinigung der Rückspülwässer und zur Entsorgung des Schlammes erforderlich ist. Außerdem bedeutet das bei der Sedimentation, Eindickung und Entwässerung abgetrennte Wasser einen relativ hohen Verlust an Wasser.

Der Erfindung liegt daher die Aufgabe zugrunde, ein Verfahren der eingangs erwähnten Art anzugeben, bei dem möglichst eine aufwendige Reinigung der Rückspülwässer, die entsprechend aufwendige Entsorgung des entstehenden Schlammes und hohe Wasserverluste vermieden werden. Der Erfindung liegt ferner die Aufgabe zugrunde, eine Vorrichtung zur Durchführung des Verfahrens anzugeben.

Diese Aufgabe wird hinsichtlich des Verfahrens durch die Merkmale des kennzeichnenden Teils des Anspruchs 1 und hinsichtlich der Vorrichtung durch die Merkmale des kennzeichnenden Teils des Anspruchs 8 gelöst. Weitere besonders vorteilhafte Ausgestaltungen der Erfindung offenbaren die Unteransprüche.

Der Erfindung liegt im wesentlichen der Gedanke zugrunde, die Rückspülwässer der dem Reaktor nachgeschalteten Filter nicht wie bisher in entsprechenden zusätzlichen Stufen zu reinigen, sondern in einen separaten Sammelbehälter zu leiten und als Lösewasser zum Ansetzen des Kalkwassers zu verwenden.

Die Verwendung von Kalkwasser hat insbesondere den Vorteil, daß die dem Schnellreaktor nachgeschalteten Filter nicht zu schnell verschmutzen und in größeren Zeitabständen rückgespült werden müssen. Denn der Anteil an Feststoffen in dem entkarbonisierten Rohwasser ist bei Verwendung von Kalkwasser wesentlich geringer als etwa bei Verwendung von Kalkmilch.

Zur Herstellung des Kalkwassers wird vorzugsweise eine Anlage verwendet, die nach dem Flockungsprinzip arbeitet. Dabei wird einem Lösebecken eine Kalkmilchsuspension sowie Lösewasser zugeführt, wobei der Kalziumhydroxid-Anteil in Lösung geht und die Verunreinigungen des Kalkes als unlöslicher Rest im Wasser verbleiben. Der hohe pH-Wert des Kalkwassers führt zur Ausflockung des ebenfalls im Kalk enthaltenen Magnesiums. Die unlöslichen Bestandteile der Kalkmilch und des Lösewassers werden dadurch in die sich bildenden Mg(OH)₂-Flocken eingebunden. Nach der Dosierung eines Flockungshilfsmittels in einer dem Lösebecken nachgeschalteten Kammer erfolgt die Ausbildung von sedimentierfähigen Makroflocken in einer dritten Kammer unter mäßigem Rühren. Nach der Abscheidung der Grobflocken erhält man dann das Kalkwasser, welches gegebenenfalls über eine Kalkwasservorlage dem Schnellreaktor zugeführt wird. Sollte das in der Kalkmilch und im Rückspülwasser enthaltene Magnesium für die Flockung nicht ausreichen, so kann in das Lösebecken zusätzlich noch ein Flockungsmittel eingegeben werden.

Da das Rückspülwasser alleine als Lösewasser in der Regel nicht ausreicht, werden dem Rückspülwasser karbonisiertes und/oder entkarbonisiertes Rohwasser zugemischt (zusätzlich in den vorstehend erwähnten Sammelbehälter eingeleitet).

Bei einer besonders vorteilhaften weiteren Ausbildung der Erfindung wird das Lösewasser vor der Einleitung in die Kalkwasseranlage bereits separat entkarbonisiert. Dadurch wird erreicht, daß der Schlammanfall in der eigentlichen Kalkwasseranlage möglichst gering bleibt und nicht durch die im Lösewasser enthaltenen Bestandteile erhöht wird. Zur separaten Entkarbonisierung des Lösewassers bietet sich insbesondere die Säureimpfung an, bei der praktisch kein zusätzlicher Schlamm entsteht. Die bei der Säureimpfung auftretende erhöhte Anionenkonzentration beeinträchtigt außerdem die Verwendung des Lösewassers in der Kalkwasseranlage nicht.

Das erfindungsgemäße Verfahren kann sowohl als Teilstrom- als auch als Hauptstromverfahren angewendet werden. Beim Teilstromverfahren wird der entkarbonisierte Teilstrom vorteilhafterweise vor einer gemeinsamen Filterung mit dem nicht entkarbonisierten Reststrom verschnitten.

Weitere Einzelheiten und Vorteile der Erfindung ergeben sich aus den folgenden anhand einer Figur erläuterten Ausführungsbeispielen.

In der Fig. ist mit 1 ein an sich aus der eingangs erwähnten Veröffentlichung des Engler-Bunte-Instituts bekannter Schnellreaktor bezeichnet, welcher in seinem unteren Teil eine Wirbelstromkammer 2 aufweist. Die Wirbelstromkammer 2 ist über eine erste Leitung 3 mit einem (aus Übersichtlichkeitsgründen nicht dargestellten) Brunnen verbunden, welcher das zu entkarbonisierende Rohwasser fördert. Eine zweite Leitung 4 verbindet die Wirbelstromkammer 2 mit einer Kalkwasseranlage 5.

Nach Durchmischung des Rohwassers und des Kalkwassers in der Wirbelstromkammer 2 durchströmt dieses Gemisch im Aufstrom eine schwebende Kontaktmasse im Inneren des Schnellreaktors 1, an der sich Kalziumkarbonat abscheidet. Das entkarbonisierte Wasser tritt am oberen Ende des Schnellreaktors 1 aus und gelangt über eine Überlaufleitung 6 (gegebenenfalls nach Durchlaufen eines nicht dargestellten Belüftungsbeckens) zu einer ersten Filterstufe 7. Das entsprechend gefilterte Wasser wird anschließend über Leitung 8 einer zweiten Filterstufe 9 zugeführt und verläßt diese Filterstufe 9 dann über eine Leitung 10 als aufbereitetes Wasser.

Die beiden Filterstufen 7 und 9 müssen in an sich bekannter Weise von Zeit zu Zeit, z.B. täglich, rückgespült werden und besitzen daher entsprechende Spülwasserleitungen, von denen in der Fig. aus Übersichtlichkeitsgründen lediglich Leitungen für die Ableitung des Wassers nach dem Spülvorgang dargestellt und mit den Bezugszeichen 11 und 12 bezeichnet sind.

Erfindungsgemäß werden die Spülwasserleitungen 11, 12 mit einem Sammelbehälter 13 verbunden, dem das zur Erzeugung des Kalkwassers benötigte Lösewasser entnommen und über eine Leitung 14 der Kalkwasseranlage 5 zugeführt wird.

Für den Fall, daß die Menge an Filterrückspülwasser nicht ausreicht, um den Lösewasserbedarf der Kalkwasseranlage 5 zu decken, kann dem Sammelbehälter 13 zusätzlich über Leitungen 15 und 16 Rohwasser und/oder entkarbonisiertes Rohwasser zugeführt werden.

Außerdem ist der Sammelbehälter 13 über eine weitere Leitung 17 mit einem Säurevorratsbehälter 18 verbunden, so daß eine Entkarbonisierung des Lösewassers in dem Sammelbehälter 13 mittels Säureimpfung erfolgen kann.

Die in der Fig. schematisch dargestellte Kalkwasseranlage 5 besteht aus mehreren Kammern 50-53, denen eine Kalkwasservorlage 54 zur Einstellung des genauen Ca(OH)₂-Gehaltes nachgeschaltet ist. Die erste Kammer 50 dient als Lösebecken. Ihr wird eine Kalkmilchsuspension 55, das bereits entkarbonisierte Lösewasser als Verdünnungswasser und gegebenenfalls ein Flockungsmittel 56 (falls der im Kalk enthaltene Magnesiumanteil zur Ausflockung nicht ausreicht) zugeführt.

Nach der Dosierung eines Flockungshilfsmittel 57 in der Kammer 51 erfolgt die Ausbildung von sedimentierfähigen Makroflocken in der Kammer 52 unter mäßigem Rühren mittels eines Rührwerkes 58. Anschließend erfolgt in der Kammer 53 die Abscheidung der Grobflocken, beispielsweise mittels eines Lamellenabscheiders, wobei der untere Teil dieser Kammer 53 als Schlamm-Eindicker 59 ausgebildet ist und die Ableitung des reinen Kalkwassers über einen entsprechenden Überlauf 60 vorgenommen wird.

Vorzugsweise wird über eine Leitung 61 ein gewisser Anteil des eingedickten Schlammes des Eindickers 59 als Kontaktschlamm zu der Flockungsstufe 50 zurückgeführt, wodurch eine zusätzliche flockungsinduzierende Wirkung erreicht wird.

Die Erfindung ist selbstverständlich nicht auf das vorstehend beschriebene Ausführungsbeispiel beschränkt. So kann beispielsweise bei der Entkarbonisierungsanlage anstatt der Filter 7 und 9 nur ein einziges entsprechend ausgelegtes Filter verwendet werden. Außer dem vorstehend beschriebenen Vollstrombetrieb, bei dem das gesamte Rohwasser dem Schnellreaktor 1 zugeführt wird, kann die Erfindung selbstverständlich auch im Teilstrombetrieb realisiert werden:

Hierzu wird dem Rohwasser über die Leitung 3 nur ein Teilstrom entnommen und in dem Schnellreaktor 1 -wie vorstehend beschrieben- entkarbonisiert. Das aus der Filterstufe 7 auslaufende Filtrat wird dann mit dem restlichen Rohwasser zur Einstellung der gewünschten Karbonhärte verschnitten. Die entsprechende Leitung für das restliche Rohwasser ist in der Fig. gestrichelt dargestellt und mit dem Bezugszeichen 19 versehen. Je nach den an das restliche Rohwasser gestellten Anforderungen, muß dieses vor dem Verschneiden mit dem Teilstrom gegebenenfalls einer entsprechenden Vorbehandlung in einer separten Stufe 20 (z.B. einer Flockung) unterzogen werden.

### Bezugszeichenliste

- 1: Schnellreaktor
- 2: Wirbelstromkammer
- 3,4: Leitungen
- 5: Kalkwasseranlage
- 6: Überlaufleitung
- 7: Filter, Filterstufe
- 8: Leitung
- 9: Filter, Filterstufe
- 10: Leitung
- 11,12: Leitungen, Spülwasserleitungen
- 13: Sammelbehälter
- 14-17: Leitungen
- 18: Säurevorratsbehälter
- 19: Leitung
- 20: Stufe, Flockungsstufe

- 50-53: Kammern
- 54: Kalkwasservorlage
- 55: Kalkmilchsuspension
- 56: Flockungsmittel
- 57: Flockungshilfsmittel
- 58: Rührwerk
- 59: Schlamm-Eindicker
- 60: Überlauf
- 61: Leitung

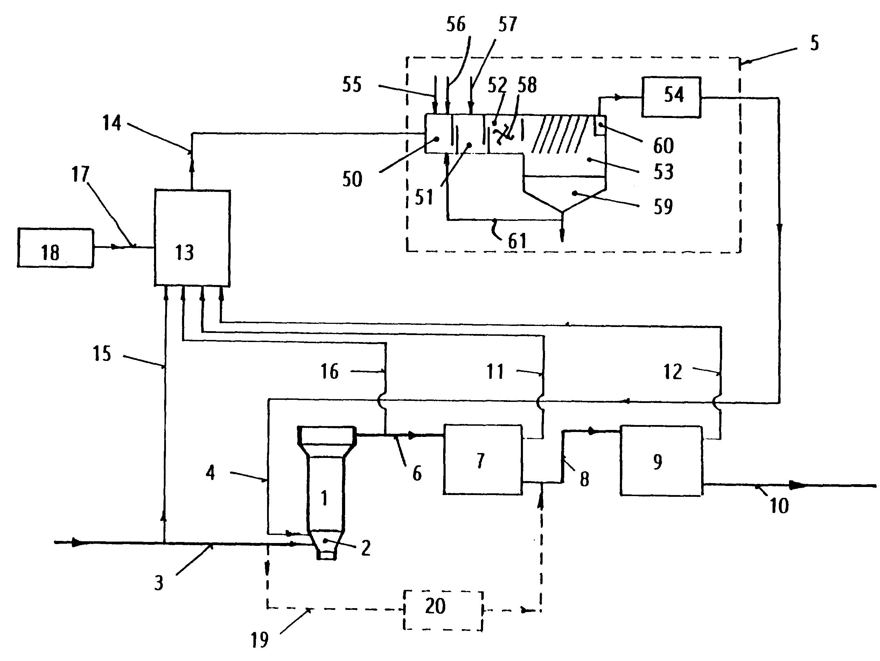

## Patentansprüche

1. Verfahren zur Entkarbonisierung von Rohwasser, wobei dem Rohwasser Kalziumhydroxide in Form von Kalkwasser in einem Schnellreaktor (1) zudosiert werden, und wobei das entkarbonisierte Rohwasser anschließend mindestens in einem rückspülbaren Filter (7,9) gefiltert wird, **dadurch gekennzeichnet**, daß das bei der Rückspülung des Filters bzw. der Filter (7,9) gewonnene Rückspülwasser gegebenenfalls unter Zumischung von Rohwasser und/oder entkarbonisiertem Rohwasser als Lösewasser zum Ansetzen des Kalkwassers verwendet wird.

2. Verfahren nach Anspruch 1, **dadurch gekennzeichnet**, daß das Lösewasser vor dem Ansetzen des Kalkwassers ebenfalls entkarbonisiert wird.

3. Verfahren nach Anspruch 2, **dadurch gekennzeichnet**, daß die Entkarbonisierung des Lösewassers durch Säureimpfung erfolgt.

4. Verfahren nach einem der Ansprüche 1 bis 3, **dadurch gekennzeichnet**, daß zum Ansetzen des Kalkwassers ein nach dem Flockungsprinzip arbeitendes Verfahren verwendet wird, wobei zunächst eine Kalkmilchsuspension mit dem Lösewasser verdünnt wird.

5. Verfahren nach Anspruch 4, **dadurch gekennzeichnet**, daß die in dem Lösewasser und in der Kalkmilch vorhandenen unlösbaren Bestandteile mit Hilfe von Magnesium-Ionen ausgeflockt werden.

6. Verfahren nach einem der Ansprüche 1 bis 5, **dadurch gekennzeichnet**, daß nur ein Teilstrom des Rohwassers im Schnellreaktor (1) entkarbonisiert und anschließend gefiltert wird, und daß das bei der Filterung des Teilstromes anfallende Rückspülwasser gegebenenfalls unter Zumischung von Rohwasser und/oder entkarbonisiertem Rohwasser als Lösewasser zum Ansetzen des Kalkwassers verwendet wird.

7. Verfahren nach Anspruch 6, **dadurch gekennzeichnet,** daß der im Schnellreaktor (1) entkarbonisierte Teilstrom des Rohwassers mit dem Reststrom verschnitten und anschliessend in einem rückspülbaren Filter (9) gefiltert wird, und daß das in der Filterstufe (9) für den verschnittenen Gesamtstrom anfallende Rückspülwasser gegebenenfalls unter Zumischung von Rohwasser und/oder entkarbonisiertem Rohwasser als Lösewasser zum Ansetzen des Kalkwassers verwendet wird.

8. Vorrichtung zur Entkarbonisierung von Rohwasser nach einem der Ansprüche 1 bis 7 mit einem mit Kontaktmasse gefüllten, aufwärts durchströmten Schnellreaktor (1), wobei der Schnellreaktor (1) eingangsseitig sowohl mit einer das Rohwasser führenden Leitung (3) als auch mit einer Kalkwasseranlage (5) und ausgangsseitig mit mindestens einem rückspülbaren Filter (7,9) zur Reinigung des entkarbonisierten Rohwassers verbunden ist, **dadurch gekennzeichnet**, daß das oder die rückspülbaren Filter (7,9) über eine entsprechende Leitung (11,12) derart mit der Kalkwasseranlage (5) verbunden ist (sind), daß das beim Spülvorgang der Filter (7,9) entstehende Spülwasser als Lösewasser der Kalkwasseranlage (5) zuführbar ist, und daß die Kalkwasseranlage (5) nach dem Flockungsprinzip arbeitet.

9. Vorrichtung nach Anspruch 8, **dadurch gekennzeichnet**, daß die das Spülwasser führende Leitung (11,12) mit einem zwischen den Filtern (7,9) und der Kalkwasseranlage (5) angeordneten Lösewasser-Sammelbehälter (13) verbunden ist, dem zusätzlich zum Spülwasser über entsprechende Leitungen (15,16) auch Rohwasser und/oder entkarbonisiertes Rohwasser vom Schnellreaktor (1) zuführbar ist.

10. Vorrichtung nach Anspruch 9, **dadurch gekennzeichnet**, daß der Sammelbehälter (13) mit einem Säurevorratsbehälter (18) zur Entkarbonisierung des Lösewassers verbunden ist.

## Claims

1. Procedure for the decarbonization of raw water, where calcium hydroxide is added in form of lime water within a fast reactor (1) and the decarbonized raw water is filtered thereafter in at least one reversible flow filter (7,9) **characterized in that** the water accumulated during backwashing of the filter or filters (7,9) is used as solvent for the preparation of the lime water, if necessary with addition of raw water and/or decarbonized raw water.

2. Procedure according to claim 1, **characterized in that** the solvent is decarbonized also, before being used for the preparation of the lime water.

3. Procedure according to claim 2, **characterized in that** the solvent is decarbonized through acid injection.

4. Procedure according to one of the claims 1 though 3, **characterized in that** the procedure used for the preparation of the lime water works according to the principle of flocculation, according to which a lime milk suspension is first diluted with the solvent.

5. Procedure according to claim 4, **characterized in that** the insoluble components of the solvent and the lime milk are flocculated through magnesium ions.

6. Procedure according to one of the claims 1 through 5, **characterized in that** only a partial volume flow is decarbonized in the fast reactor (1) and filtered thereafter and that the backwashing water accumulated during filtering of the partial volume flow is used as solvent for the preparation of the lime water, if necessary with addition of raw water and/or decarbonized raw water.

7. Procedure according to claim 6, **characterized in that** the partial raw water volume flow which is decarbonized in the fast reactor (1) is mixed with the remaining flow and subsequently filtered in a reversible flow filter (9), and that the backwashing water accumulated during the filter stage (9) for the mixed total volume flow is used as solvent for the preparation of the lime water, if necessary with addition of raw water and/or decarbonized raw water.

8. Device intended for the decarbonization of raw water according to one of the claims 1 through 7 including a fast reactor (1) with upward flow direction and filled with a contact mass, the fast reactor (1) ) being connected on the inlet side to a pipe (3) carrying raw water and to a lime water plant (5), and on the outlet side to at least one reversible flow filter (7,9) for the cleaning of the decarbonized raw water, **characterized in that** the reversible flow filter(s) (7,9) is/are connected via a corresponding pipe (11,12) to the lime water plant (5) in such a way that the backwashing water, accumulating during the filtration process of the filter(s) (7,9) can be fed into the lime water plant (5) as solvent and that the lime water plant works according to the principle of flocculation.

9. Device according to claim 8, **characterized in that** the pipes (11,12) carrying the backwashing water are connected to a solvent storage tank (13) located between the filters (7,9) and the lime water plant (5), which can be fed, in addition to backwashing water, with raw water and/or decarbonized raw water from the fast reactor (1), via corresponding pipes (15,16).

10. Device according to claim 9, **characterized in that** the solvent storage tank (13) ist connected to an acid storage tank (18) used for the decarbonization of the solvent.

## Revendications

1. Procédé destiné à la décarbonatation des eaux brutes, durant lequel l'hydroxyde de calcium en forme de l'eau de chaux est ajouté aux eaux brutes dans un réacteur rapide (1) ) et durant lequel les eaux brutes décarbonisées sont filtrées ensuite au moins dans un filtre avec lavage à contre-courant (7,9), **caractérisé en ce que** l'eau provenant du lavage à contre-courant du filtre/des filtres (7,9) est utilisée comme l'eau de dissolution pour la préparation de l'eau de chaux, en cas de besoin avec addition dosée de l'eau brute et/ou de l'eau brute décarbonisée.

2. Procédé selon revendication 1, **caractérisé en ce que** l'eau de dissolution est également décarbonisée avant être utilisée pour la préparation de l'eau de chaux.

3. Procédé selon revendication 2, **caractérisé en ce que** l'eau de dissolution est décarbonisée par inoculation d'acide.

4. Procédé selon une des revendications 1 à 3, **caractérisé en ce que** l'eau de chaux est préparée selon un procédé suivant le principe de la floculation où une suspension de lait de chaux est d'abord diluée avec l'eau de dissolution.

5. Procédé selon revendication 4, **caractérisé en ce que** les constituants insolubles contenus dans l'eau de dissolution et le lait de chaux sont floculés à l'aide des ions de magnésium.

6. Procédé selon une des revendications 1 à 5, **caractérisé en ce que** seulement un courant partiel des eaux brutes est décarbonisé dans le réacteur rapide (1) ) et filtré par la suite, et que l'eau de lavage à contre-courant provenant de la filtration du courant partiel est utilisée comme l'eau de dissolution pour la préparation de l'eau de chaux, en cas de besoin avec addition dosée de l'eau brute et/ou l'eau brute décarbonisée.

7. Procédé selon revendication 6, **caractérisé en ce que** le courant d'eau partiel des eaux brutes décarbonisé dans le réacteur rapide (1) est mélangé avec le courant résiduel et ensuite filtré dans un filtre avec lavage à contre-courant (9), et que l'eau de lavage à contre-courant provenant de la filtration (9) du courant entier mélangé, est utilisée, en cas de besoin avec addition dosée de l'eau brute et/ou eau brute décarbonisée, comme l'eau de dissolution pour la préparation de l'eau de chaux.

8. Installation pour la décarbonatation de l'eau brute selon une des revendications 1 à 7 comprenant un réacteur rapide (1) avec courant d'eau ascendante et rempli d'une masse de contact, lequel est relié au côté d'arrivée d'eau au tuyau d'eau brute (3) et à la station de préparation d'eau de chaux (5) et au côté de sortie d'eau au moins à un filtre avec lavage à contre-courant (7,9) pour la filtration de l'eau brute décarbonisée, **caractérisée en ce que** le/les filtre(s) avec lavage à contre-courant (7,9) est/sont relié(s) par un tuyau correspondant avec la station de préparation de l'eau de chaux (5) de sorte que l'eau de lavage s'accumulant peut être alimentée à la station de préparation de l'eau de chaux (5) comme l'eau de dissolution et que la station de préparation de l'eau de chaux (5) fonctionne selon le principe de la floculation.

9. Installation selon revendication 8, **caractérisée en ce que** le tuyau de l'eau de lavage (11,12) est relié à un bassin collecteur d'eau de dissolution (13) placé entre les filtres (7,9) et la station de préparation de l'eau de chaux (5), auquel peuvent être alimenté, à part de l'eau de lavage, l'eau brute et/ou l'eau brute décarbonisée provenant du réacteur rapide (1) ) par des tuyaux correspondants.

10. Installation selon revendication 9, **caractérisée en ce que** le bassin collecteur (13) est relié à un réservoir d'acide (18) destiné à la décarbonatation de l'eau de dissolution.
